# EUROPÄISCHE PATENTSCHRIFT

(11) **EP 3 484 768 B1**
(45) Veröffentlichungstag und Bekanntmachung des Hinweises auf die Patenterteilung: **30.03.2022**
(21) Anmeldenummer: 17737815.5
(22) Anmeldetag: 12.07.2017
(51) Int. Cl.: B64D 11/06, B60N 2/06, B60N 2/07, B60N 2/18, B60N 2/42, B60N 2/427

(54) **FLUGZEUGSITZ MIT EINER SITZBAUGRUPPE**
AIRPLANE SEAT WITH A SEAT ASSEMBLY
SIÈGE D'AVION ÉQUIPÉ D'UN ENSEMBLE SIÈGE

(30) Priorität: 18.07.2016 DE 102016213085
(43) Veröffentlichungstag der Anmeldung: 22.05.2019
(73) Patentinhaber: Lufthansa Technik AG, 22335 Hamburg (DE)
(72) Erfinder: THOMASCHEWSKI, Oliver, 22846 Norderstedt (DE); WENSAUER, Wolfgang, 94116 Hutthurm (DE); SARCHER, Stefan, 84137 Vilsbiburg (DE); GERHARD, Matthias, 21445 Wulfsen (DE)
(74) Vertreter: Müller Verweyen
(86) Internationale Anmeldenummer: PCT/EP2017/067566
(87) Internationale Veröffentlichungsnummer: WO 2018/015247

(56) Entgegenhaltungen:
- WO-A1-94/12806
- WO-A1-2010/041235
- WO-A1-2013/174520
- US-A- 5 657 950
- US-A1- 2011 079 681
- US-B1- 8 678 465

## Beschreibung

Die Erfindung betrifft einen Flugzeugsitz mit einer Sitzbaugruppe.

Für einen möglichen Crashfall eines Flugzeugs bestehen luftfahrtrechtliche Anforderungen, wonach eine dynamische Insassenbelastung unter definierten Bedingungen nicht überschritten werden darf. Hierfür ist es notwendig, dass der Flugzeugsitz eine Möglichkeit bietet, die auf den Passagier einwirkenden Kräfte, resultierend aus den auftretenden Beschleunigungen, in einem Crashfall durch eine Aufnahme kinetischer Energie zu begrenzen.

Aus dem Stand der Technik sind Sitzunterbauten von Flugzeugsitzen bekannt, die ein metallisches Gestell als kraftübertragendes Element aufweisen. In der Regel weist das Gestell eine Fachwerkstruktur auf. Als Material wird typischerweise eine Aluminiumlegierung verwendet. Die Steifigkeit des Sitzunterbaus wird konstruktiv so ausgelegt, dass die auf den sitzenden Passagier einwirkenden Kräfte in einem Crashfall durch die Verformung des Sitzunterbaus begrenzt werden.

Die plastische Verformung erfolgt über den ganzen Sitzunterbau verteilt. Bei translatorischen Beschleunigungen bzw. den resultierenden Kräften in einem entsprechenden Crashfall stellt sich eine Rotationsbewegung des Flugzeugsitzes um einen virtuellen Drehpunkt, der relativ zur Sitzfläche des Flugzeugsitzes tief in Richtung der Bodenebene liegt, ein. Dies führt im oberen Bereich des Sitzes zu einer übermäßigen translatorischen Verschiebung und somit zu einer großen Bewegungsenveloppe, die als Bewegungsraum von weiteren Bauteilen freigehalten werden muss, um Kollisionen mit möglichen Verletzungsfolgen für den Passagier zu verhindern.

Alternativ besteht die Möglichkeit, den Freiraum um den Passagier so klein zu halten, dass der zurückgelegte Weg beispielsweise des Kopfes im Crashfall so kurz ist, dass dieser bis zum Auftreffen auf einem festinstallierten Teil in der Bewegungsenveloppe, zum Beispiel Stuhl oder Tisch, noch keine kritische Energie aufgebaut hat, die zu Verletzungen führt.

Hieraus ergibt sich entweder beispielsweise eine enge Bestuhlung oder ein sehr großer Freiraum. Beide Varianten sind nachteilig, weil sie zu Einbußen im Komfort oder zu einem hohen Platzbedarf in der räumlich begrenzten Kabine führen. Weiterhin stellt sich eine Polsterung aller vorhandenen Teile in der Bewegungsenveloppe als nicht praktikabel dar.

In der WO 2013/174520 A1 wird ferner ein Flugzeugsitz vorgeschlagen, bei dem die Sitzbaugruppe eine Sitzbasis und eine Sitzflächenbaugruppe umfasst, und bei dem die Sitzflächenbaugruppe gegenüber der Sitzbasis in einer Richtung translatorisch verschiebbar und in wenigstens einer Stellung blockierbar ist, wobei zusätzlich eine Kraftbegrenzungseinrichtung vorgesehen ist, welche bei einer Aktivierung eine Relativbewegung zwischen der Sitzbasis und der blockierten Sitzflächenbaugruppe ermöglicht. Die US 2011/079681 A1 zeigt einen Flugzeugsitz mit einer Kraftbegrenzungseinrichtung und einer Sicherungseinrichtung.

Die Kraftbegrenzungseinrichtung zwischen der Sitzbasis und der Sitzflächenbaugruppe ermöglicht den Abbau kinetischer Energie eines Passagiers auf dem Sitz in einem Crashfall, wobei der Abbau im Wesentlichen nicht durch eine Verformung der tragenden Struktur im Bereich des Sitzunterbaus erfolgt. Der Energieabbau erfolgt in der Kraftbegrenzungseinrichtung und kann gerichtet in Lastrichtung erfolgen, ohne dass eine Rotationsbewegung um einen Drehpunkt im Bodenbereich des Flugzeugsitzes eingeleitet wird. Die Kraftbegrenzungseinrichtung reduziert die Belastungen für einen Passagier, so dass Verletzungen vermieden werden können. Weiterhin wirkt sich die Kraftbegrenzungseinrichtung positiv auf die Struktur des Flugzeugsitzes aus, da dieser ebenfalls durch die Kraftbegrenzungseinrichtung nur mit begrenzten und dadurch definierten Kräften belastet wird, so dass ein Strukturversagen durch Lastspitzen verhindert werden kann. Die strukturelle Auslegung des Sitzunterbaus kann so gezielt auf die durch die Kraftbegrenzungseinrichtung begrenzten Kraftwerte ausgelegt werden, was eine leichte Bauweise ermöglicht.

Aufgabe der vorliegenden Erfindung ist es, einen Flugzeugsitz mit einer Sitzbaugruppe, mit einer Sitzbasis, einer Sitzflächenbaugruppe und einer dazwischen angeordneten Kraftbegrenzungseinrichtung bereitzustellen, welcher ein hinsichtlich der Insassenbelastung weiter verbessertes Bewegungsverhalten im Crashfall aufweisen soll.

Erfindungsgemäß wird zur Lösung der Aufgabe ein Flugzeugsitz mit den Merkmalen des Anspruchs 1 vorgeschlagen. Weitere bevorzugte Weiterbildungen der Erfindung sind den Unteransprüchen, den Figuren und der zugehörigen Beschreibung zu entnehmen.

Gemäß dem Grundgedanken der Erfindung wird vorgeschlagen, dass sich die Sitzflächenbaugruppe gegenüber der Sitzbasis in Richtung der ersten Relativbewegung über eine erste Sicherungseinrichtung abstützt, wobei die erste Sicherungseinrichtung bei einer Bewegung der Sitzflächenbaugruppe gegenüber der Sitzbasis oder umgekehrt in Richtung der ersten Relativbewegung eine höhere Verformungsgrenze als das zur Aktivierung der ersten Kraftbegrenzungseinrichtung erforderliche Kraftbegrenzungsniveau aufweist.

Die vorgeschlagene Lösung weist mehrere für das relative Bewegungsverhalten der Sitzflächenbaugruppe zu der Sitzbasis und die dadurch bedingte Insassenbelastung zu erzielende Vorteile auf. Zum einen wird durch die Sicherungseinrichtung eine sehr genaue Auslöseschwelle definiert, ab der die Sitzflächenbaugruppe die erste Relativbewegung zu der Sitzbasis oder umgekehrt ausführen kann, d.h. ab der die erste Kraftbegrenzungseinrichtung aktiviert wird. Die Verbindung zwischen der Sitzflächenbaugruppe und der Sitzbasis über die erste Sicherungseinrichtung muss aufgrund der höheren Verformungsgrenze der ersten Sicherungseinrichtung in einem ersten Schritt zuerst aufgehoben werden, bevor die Sitzflächenbaugruppe die durch die erste Kraftbegrenzungseinrichtung ermöglichte erste Relativbewegung gegenüber der Sitzbasis ausführen kann. Dadurch kann der Beginn und die zu überschreitende Kraftschwelle durch die Auslegung der ersten Sicherungseinrichtung unabhängig von der ersten Kraftbegrenzungseinrichtung genau festgelegt werden. Ferner bietet die erste Sicherungseinrichtung während des Normalgebrauchs des Flugzeugsitzes, also für den Fall, wenn kein Crashfall vorliegt, einen Schutz der ersten Kraftbegrenzungseinrichtung, durch welchen verhindert wird, dass die erste Kraftbegrenzungseinrichtung durch äußere Krafteinwirkungen bis zum Erreichen der Verformungsgrenze der ersten Sicherungseinrichtung belastet wird, so dass die erste Kraftbegrenzungseinrichtung zum Zeitpunkt der erstmaligen Aktivierung im Crashfall als noch vollständig unbelastet anzusehen ist. Damit weist die erste Kraftbegrenzungseinrichtung bei ihrer Aktivierung in jedem Fall genau die mechanischen Eigenschaften auf, welche sie zur Verwirklichung der ersten definierten kraftbegrenzten Relativbewegung zwischen der Sitzflächenbaugruppe und der Sitzbasis aufweisen soll. Die erste Sicherungseinrichtung ist praktisch parallelwirkend zu der ersten Kraftbegrenzungseinrichtung angeordnet und weist eine höhere Verformungsgrenze auf, so dass die wirkenden Kräfte im Normalgebrauch bis zu der Verformungsgrenze immer von der ersten Sicherungseinrichtung abgefangen werden und die erste Kraftbegrenzungseinrichtung praktisch überbrückt wird. Die erste Kraftbegrenzungseinrichtung wird erst dann belastet, wenn die erste Sicherungseinrichtung durch das Überschreiten der höheren Verformungsgrenze soweit verformt oder sogar vollständig zerstört ist, dass sie ihre Sicherungsfunktion nicht mehr wahrnimmt und die Kräfte stattdessen über die erste Kraftbegrenzungseinrichtung abgefangen werden. Die erste Kraftbegrenzungseinrichtung wird dabei erstmalig überhaupt belastet, so dass sie in jedem Fall ihre durch ihre Auslegung vorbestimmten Eigenschaften aufweist und die Kraftbegrenzungscharakteristik der vorbestimmten Kraftbegrenzungscharakteristik entspricht.

Dabei kann die erste Kraftbegrenzungseinrichtung eine nichtlineare Kraftbegrenzungscharakteristik aufweisen, sofern dies für die Insassenbelastung sinnvoll ist. Es ist z.B. möglich, die erste Kraftbegrenzungseinrichtung so auszulegen, dass ein linear ansteigender oder stufenförmiger degressiver oder progressiver Verlauf der kraftbegrenzten ersten Relativbewegung verwirklicht werden kann. Sofern die erste Relativbewegung der beiden Teile eine Bewegung des Insassen in Richtung eines vorderen Flugzeugsitzes zur Folge hat, wäre es denkbar einen progressiven Kraftbegrenzungsverlauf zu verwirklichen, durch welchen insbesondere verhindert werden kann, dass der Insasse im Unfall während der Endphase der ersten Relativbewegung auf den vorderen Flugzeugsitz aufschlägt. Ferner kann das Bewegungsverhalten der Sitzflächenbaugruppen und Sitzbasen verschiedener benachbarter Flugzeugsitze unterschiedlich ausgelegt und aufeinander abgestimmt werden. Außerdem kann das Bewegungsverhalten der Sitzflächenbaugruppe und der Sitzbasis zueinander eines Flugzeugsitzes in Abhängigkeit von der individuellen Anordnung im Flugzeug ausgelegt werden.

Dabei kann die erste Kraftbegrenzungseinrichtung bevorzugt mehrere Kraftbegrenzungsabschnitte aufweisen, welche während der Aktivierung der ersten Kraftbegrenzungseinrichtung in zeitlicher Abfolge nacheinander aktivierbar sind und ein unterschiedliches Kraftbegrenzungsniveau aufweisen. Durch die vorgeschlagene Lösung können bevorzugt stufenförmige oder linear ansteigende bzw. abfallende Kraftbegrenzungscharakteristiken mit unterschiedlichen Steigungen verwirklicht werden.

Ferner kann wenigstens eine zweite Sicherungseinrichtung vorgesehen sein, über welche sich die Sitzflächenbaugruppe in Richtung einer zweiten Relativbewegung gegenüber der Sitzbasis abstützt. Durch die zweite Sicherungseinrichtung kann eine zweite Relativbewegung in eine zweite Richtung zwischen der Sitzflächenbaugruppe und der Sitzbasis verhindert oder bewusst erst ab der Verformung bzw. Zerstörung der Sicherungseinrichtung ermöglicht werden. Dadurch kann in Kombination mit der ersten Sicherungseinrichtung ein komplexeres Bewegungsverhalten zwischen der Sitzflächenbaugruppe und der Sitzbasis im Crashfall eingestellt bzw. realisiert werden.

Dabei kann weiterhin wenigstens eine zweite Kraftbegrenzungseinrichtung vorgesehen sein, welche bei einer Aktivierung eine zweite, sich von der ersten Relativbewegung unterscheidende Relativbewegung zwischen der Sitzflächenbaugruppe und der Sitzbasis ermöglicht, wobei die zweite Sicherungseinrichtung bei einer Bewegung der Sitzflächenbaugruppe gegenüber der Sitzbasis in Richtung der zweiten Relativbewegung bevorzugt eine höhere Verformungsgrenze als das zur Aktivierung der zweiten Kraftbegrenzungseinrichtung erforderliche Kraftbegrenzungsniveau aufweist. Die zweite Kraftbegrenzungseinrichtung wird damit durch die zweite Sicherungseinrichtung überbrückt, welche in der Richtung ihrer Sicherungswirkung genau auf die Richtung der zweiten Relativbewegung abgestimmt ist, welche durch die zweite Kraftbegrenzungseinrichtung ermöglicht werden soll.

Ferner ist es bevorzugt, dass die erste Kraftbegrenzungseinrichtung in Richtung der zweiten Relativbewegung und/oder die zweite Kraftbegrenzungseinrichtung in Richtung der ersten Relativbewegung an der Sitzflächenbaugruppe und/oder an der Sitzbasis verschieblich geführt ist. Durch die vorgeschlagene Lösung können die beiden Kraftbegrenzungseinrichtungen unabhängig voneinander aktiviert werden. Ferner wird die durch die erste oder zweite Kraftbegrenzungseinrichtung ermöglichte erste oder zweite Relativbewegung nicht durch die jeweils andere Kraftbegrenzungseinrichtung gestört, da diese aufgrund der verschieblichen Führung bei dieser Relativbewegung nicht aktiviert wird. Die Gesamtbewegung zwischen der Sitzflächenbaugruppe und der Sitzbasis wird dann durch die sich ergänzenden und gegenseitig nicht beeinflussenden beiden Relativbewegungen erzeugt.

Die Verwendung von Scherbolzen als Sicherungseinrichtung ist insofern von Vorteil, da die Verbindung durch das Abscheren der Scherbolzen schlagartig aufgehoben wird. Nach dem Abscheren des Scherbolzens wirkt dann ausschließlich die jeweils zugeordnete erste oder zweite Kraftbegrenzungseinrichtung, so dass die kraftbegrenzte erste oder zweite Relativbewegung zwischen der Sitzflächenbaugruppe und dem Sitzunterbau allein durch die Auslegung der ersten oder zweiten Kraftbegrenzungseinrichtung definiert wird.

Gemäß einer bevorzugten Ausführungsform kann die erste und/oder zweite Kraftbegrenzungseinrichtung ein gewelltes, plastisch verformbares Verformungsteil oder einen komprimierbaren Metallschaum umfassen. Die kraftbegrenzte Relativbewegung wird dann durch das Komprimieren oder Dehnen des Verformungsteils oder durch das Komprimieren des Metallschaumes bewirkt. Aufgrund der gewellten Form des Verformungsteils kann dieses besonders einfach komprimiert oder gedehnt werden, indem die Wellen auseinander gezogen oder zusammengedrängt werden. Dabei ist es wichtig, dass das Verformungsteil oder der Metallschaum nach dem Aufheben der Verbindung über die Sicherungseinrichtung die einzige Kraftverbindung zwischen der Sitzflächenbaugruppe und der Sitzbasis bilden und damit die Kraftbegrenzungscharakteristik bestimmen. Beide Arten der Kraftbegrenzungseinrichtungen bieten sich insofern an, da diese eine sehr genaue Auslegung der Kraftbegrenzungscharakteristik ermöglichen, wobei diese zusätzlich eine sehr lange Lebensdauer mit gleichbleibenden mechanischen Eigenschaften aufweisen, so dass mit ihnen auch bei einer Aktivierung nach einer langen Lebensdauer noch die gewünschte Kraftbegrenzungscharakteristik verwirklicht werden kann.

Weiter wird vorgeschlagen, dass die Sitzflächenbaugruppe gegenüber der Sitzbasis mittels einer Verstelleinrichtung in eine erste und/oder eine zweite Verstellrichtung verstellbar ist, und die durch die erste und/oder zweite Kraftbegrenzungseinrichtung ermöglichte erste und/oder zweite Relativbewegung gleichgerichtet zu der ersten und/oder zweiten Verstellrichtung sind. Die Mechaniken der Verstelleinrichtungen können dadurch zusätzlich zur Führung der kraftbegrenzten Relativbewegungen genutzt werden, so dass besondere Führungen hierzu nicht erforderlich sind.

Ferner kann die durch die erste und/oder die zweite Verstelleinrichtung ermöglichte Verstellbewegung durch eine erste und/oder zweite Blockiereinrichtung blockierbar sein, und die erste und/oder zweite Sicherungseinrichtung durch jeweils ein Blockierteil der ersten und/oder zweiten Blockiereinrichtung gebildet sein. Die Sicherungseinrichtung wird damit außer zur Überbrückung der Kraftbegrenzungseinrichtung zusätzlich als Blockierteil zur Blockierung der Verstellbewegung genutzt.

Weiter wird vorgeschlagen, dass zwischen der Sitzbasis und der Sitzflächenbaugruppe ein Drehtisch vorgesehen ist, und die erste oder die zweite Relativbewegung durch eine Drehbewegung der Sitzflächenbaugruppe gegenüber der Sitzbasis um eine senkrecht zu einer Sitzfläche der Sitzflächenbaugruppe ausgerichtete Drehachse gebildet ist. Durch die vorgeschlagene Lösung kann sich die Sitzflächenbaugruppe im Unfall in eine für die Kräfteverhältnisse und die auf den Insassen einwirkenden Belastungen günstigere Richtung ausrichten.

Die Erfindung wird im Folgenden anhand bevorzugter Ausführungsformen unter Bezugnahme auf die beigefügten Figuren erläutert. Dabei zeigt
- Fig. 1:: einen Flugzeugsitz mit einer Sitzbaugruppe;
- Fig. 2:: den Flugzeugsitz aus der Fig. 1 ohne eine Sitzflächenbaugruppe;
- Fig. 3:: ein schematisch dargestelltes Teil einer Sitzflächenbaugruppe und ein schematisch dargestelltes Teil einer Sitzbasis mit zwei Sicherungseinrichtungen;
- Fig. 4:: eine Kraftbegrenzungseinrichtung mit mehreren Kraftbegrenzungsabschnitten und eine damit zu verwirklichende Kraftbegrenzungskurve;
- Fig. 5 bis 8:: verschiedene Ausführungsformen von Kraftbegrenzungseinrichtungen mit einer Sicherungseinrichtung;
- Fig. 9:: eine alternative Ausführungsform eines Flugzeugsitzes.

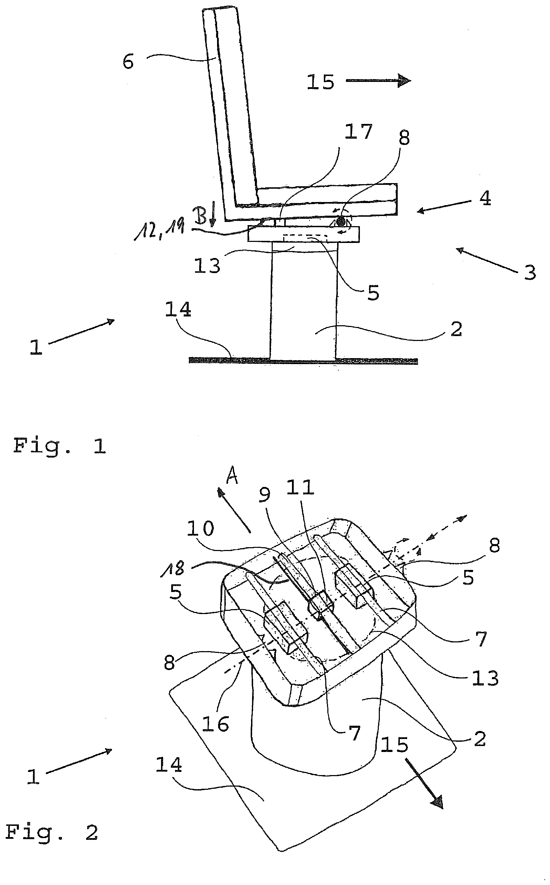

Fig. 1 zeigt ein vorteilhaftes Ausführungsbeispiel eines Flugzeugsitzes 1 mit einem Sitzunterbau 2, auf dem eine Sitzbaugruppe 3 angeordnet ist. Die Sitzbaugruppe 3 umfasst eine Sitzbasis 5, die fest mit dem Sitzunterbau 2 verbunden werden kann und in Fig. 2 zu erkennen ist sowie eine Sitzflächenbaugruppe 4. An der Sitzflächenbaugruppe 4 ist eine Lehnenbaugruppe 6 angeordnet.

Der Winkel zwischen der Lehnenbaugruppe 6 und der Sitzflächenbaugruppe 4 ist vorteilhafterweise verstellbar. Der verstellbare Winkel erlaubt verschiedene fixierte Sitzwinkel zwischen Rückenlehne und Sitzfläche, was unterschiedliche Sitzpositionen ermöglicht. Weiterhin können in alternativen Ausführungsbeispielen Armlehnen und/oder Fußstützen an der Sitzflächenbaugruppe angeordnet sein.

Der Sitzunterbau 2 ist mit der Bodenstruktur des Flugzeugs verbindbar, und ist daher in einem eingebauten Zustand des Flugzeugsitzes flugzeugfest.

Die Sitzflächenbaugruppe 4 kann gegenüber der Sitzbasis 5, die in diesem Ausführungsbeispiel auf einem feststellbaren Drehteller 13 angeordnet ist, mittels einer ersten Verstelleinrichtung translatorisch in Blickrichtung 15 und/oder entgegen der Blickrichtung 15 eines Sitzenden verschoben werden. Die Verschiebbarkeit ist in einem Normalzustand gebremst, wobei die Bremse durch einen Bediener bzw. einen Sitzenden gelöst werden kann, um den Flugzeugsitz 1 z.B. an einen möglichen Tisch, in den Figuren nicht dargestellt, heranzubewegen. Die Betriebsbremsen, die die translatorische Verschiebbarkeit unter normalen Betriebslasten bremsen und auf diese Weise auch blockieren können, rutschen in einem Crashfall typischerweise aufgrund der hohen Belastung durch. Sie können aber auch kinetische Energie abbauen. Die Bewegung in oder entgegen der Blickrichtung 15 entspricht hier einer ersten Relativbewegung A zwischen der Sitzflächenbaugruppe 4 und der Sitzbasis 5.

Weiterhin weist der Flugzeugsitz 1 in diesem Ausführungsbeispiel in der Sitzflächenbaugruppe 4 ein Wippengelenk 8 auf, wodurch der obere Teil der Sitzflächenbaugruppe 4 gegenüber der Sitzbasis 5, dem Sitzunterbau 2 und/oder dem Kabinenboden 14 wippbar ist, so dass für dieses Teil eine begrenzte, vorzugsweise federbelastete Rotation um eine Querachse 16 durch das Wippengelenk 8 möglich ist. Die Wippbarkeit bildet hier eine zweite Verstelleinrichtung und ermöglicht eine zweite Relativbewegung B zwischen der Sitzflächenbaugruppe 4 und der Sitzbasis 5.

Die Wippbarkeit des Flugzeugsitzes 1 kann in mindestens einer Stellung blockiert werden, so dass für kritische Flugphasen, wie z.B. Start oder Landung, eine definierte Standardstellung durch geeignete Vorgehensweisen eingenommen werden kann oder muss. Die Blockierung wird in diesem Ausführungsbeispiel durch ein Blockierteil 12 bewirkt.

Ferner sind zwischen der Sitzflächenbaugruppe 4 und der Sitzbasis 5 zwei Kraftbegrenzungseinrichtungen 9 und 17 sowie zwei die beiden Kraftbegrenzungseinrichtungen 9 und 17 überbrückende Sicherungseinrichtungen 18 und 19 vorgesehen. Die beiden Kraftbegrenzungseinrichtungen 9 und 17 sind jeweils so ausgerichtet, dass sie bei einer Aktivierung jeweils die Relativbewegungen A und B kraftbegrenzen. Dabei können die beiden Kraftbegrenzungseinrichtungen 9 und 17 zusätzlich jeweils gegenüber der Sitzflächenbaugruppe 4 und/oder gegenüber der Sitzbasis 5 in die Relativrichtung A oder B, in welche sie nicht wirken, bewusst verschieblich ausgeführt sein, so dass sie unabhängig und ohne sich gegenseitig zu stören aktivierbar sind.

In einem bevorzugten Ausführungsbeispiel ist die Wippbewegung der Sitzfläche des Flugzeugsitzes 1 auf 8° nach hinten und 2° nach vorne begrenzt. Weiterhin kann ein typischer Anstellwinkel eines Flugzeugs, in dem der Flugzeugsitz 1 verwendet wird, von 2° durch das Wippengelenk 8 kompensiert werden. Das Wippengelenk 8 kann daher in Abhängigkeit von der Sitzausrichtung, d.h. mit Blickrichtung 15 in oder entgegen der Flugrichtung, die Sitzfläche des Flugzeugsitzes 1 im Reiseflug senkrecht zur Erdanziehungskraft ausrichten. Der Flugzeugsitz 1 kann daher so weit nach vorne kippen, dass die Sitzfläche nach vorne hin abfällt, was ein einfaches Aufstehen aus dem Flugzeugsitz 1 ermöglichen kann. Dies wird weiterhin durch die vorteilhafte Anordnung des Wippengelenks 8 im vorderen Bereich der Sitzfläche unterstützt. In diesem vorteilhaften Ausführungsbeispiel ist die Wippbewegung federbelastet.

Die Wippbewegung oder auch Freiheit des Wippengelenks 8 kann in diesem vorteilhaften Ausführungsbeispiel durch einen Bediener blockiert werden, so dass eine feststehende Sitzposition des Flugzeugsitzes 1 in kritischen Flugphasen, wie Start, Landung oder Rollen, erreicht werden kann. Weiterhin ist ein Blockieren der Wippbewegung mit einem Blockierteil 12 bei einer sehr flachen Sitzeinstellung mit großem Winkel zwischen Lehnenbaugruppe 6 und Sitzfläche vorteilhaft, um den Flugzeugsitz 1 in einer Liegeposition fixieren zu können, da in diesem Anwendungsfall eine Wippbarkeit unerwünscht ist.

In Fig. 2 ist der untere Teil einer Sitzbaugruppe 3 dargestellt. Die Sitzbasis 5 der Sitzbaugruppe 3 bilden in diesem Ausführungsbeispiel zwei Führungselemente, die im montierten Zustand mit dem Sitzunterbau 2 verbunden sind. Die Verbindung zwischen dem Sitzunterbau 2 und der Sitzbasis 5 kann über einen Drehteller 13 erfolgen. Hierdurch kann die Sitzbaugruppe 3 gegenüber dem Kabinenboden 14 gedreht werden, wodurch sich die Nutzbarkeit und Flexibilität des Flugzeugsitzes verbessert. Die Führungselemente sind als Sitzbasis 5 in diesem Ausführungsbeispiel auf dem Drehteller 13 angeordnet und weisen eine Betriebsbremse auf, mit der die translatorische Verschiebbarkeit blockiert werden kann.

Die Sitzbaugruppe 3 weist vorteilhafterweise zwei Führungsstangen 7 auf, die von den Führungselementen der Sitzbasis 5 umschlossen werden und die geführte erste Relativbewegung A zwischen Sitzbasis 5 und Sitzflächenbaugruppe 4 ermöglichen, so dass die Sitzflächenbaugruppe 4 in einer Richtung, die auch die Gegenrichtung umfassen kann, translatorisch verschiebbar ist. Die Verschiebbarkeit ist in einem vorteilhaften Ausführungsbeispiel grundsätzlich gebremst, so dass sich eine widerstandslose translatorische Verschiebbarkeit erst beim manuellen Lösen der Bremse durch den Passagier ergibt. In einer Stellung kann die translatorische Verschiebbarkeit gebremst und zusätzlich blockiert werden. Für die Blockierung ist eine Baugruppe mit einer ersten Sicherungseinrichtung 18 und einer ersten Kraftbegrenzungseinrichtung 9 vorgesehen, welche die Bewegung der Sitzflächenbaugruppe 4 unter normalen Betriebslasten blockiert. Die Kraftbegrenzungseinrichtung 9 kann hierfür mit der Sitzbasis 5 verbunden oder ein Teil dieser sein.

Zwischen den Führungsschienen 7 ist in diesem Ausführungsbeispiel die erste Kraftbegrenzungseinrichtung 9 mittig in der Sitzbaugruppe angeordnet. Die erste Kraftbegrenzungseinrichtung 9 besteht in vorteilhafter Weise aus einem stabförmigen Faserverbundbauteil 10, das parallel zu den Führungsschienen 7 angeordnet ist, sowie einem formstabilen Bauteil 11, welches eine Anbindung an die Sitzbasis 5 bzw. an den Sitzunterbau 2 oder den Drehteller 13 aufweist. In einer vorteilhaften Ausführungsform greift das formstabile Bauteil 11 nur in einer für kritische Flugphasen vorgesehenen Stellung des Flugzeugsitzes 1 in das stabförmige Faserverbundbauteil 10 ein.

Die erste Kraftbegrenzungseinrichtung 9 ermöglicht nach einer Verformung oder Zerstörung der ersten Sicherungseinrichtung 18 bei einer Aktivierung, d.h. bei Überschreiten einer Kraftgrenze, eine erste Relativbewegung zwischen Sitzbasis 5 und Sitzflächenbaugruppe 4 in oder entgegen der Pfeilrichtung A. Die erste Relativbewegung ist kraftbegrenzt und ermöglicht im Crashfall die Aufnahme kinetischer Energie, so dass die auf den Passagier einwirkenden Kräfte im Crashfall begrenzt sind, was Verletzungen durch die im Crashfall auftretenden hohen Beschleunigungen verhindern kann. Weiterhin kann die erste Kraftbegrenzungseinrichtung 9 dazu eingesetzt werden, Schocklasten zu reduzieren.

Im Fall einer Aktivierung der ersten Kraftbegrenzungseinrichtung 9 wird in diesem Ausführungsbeispiel das formstabile Bauteil 11 energieverzehrend gegenüber dem stabförmigen Faserverbundbauteil 10 verschoben. Das Faserverbundbauteil 10 wird dabei unter Energieaufnahme zerstört, z.B. durch Zerdrücken oder Zerfasern. Die Richtung der Relativbewegung ergibt sich aus der einwirkenden Beschleunigung, wobei die Relativbewegung durch die Führungsschienen 7 geführt wird.

Die Verwendung einer Kraftbegrenzungseinrichtung zur Energieaufnahme ermöglicht die Trennung der Energie absorbierenden Bewegung im Crashfall von der mechanischen Struktur des Flugzeugsitzes. Bisher wurde die Energie üblicherweise durch plastische Verformung des Sitzgestells selbst abgebaut. Da diese plastische Verformbarkeit nicht mehr notwendig ist, ermöglicht es den Einsatz von Faserverbundmaterialien in der mechanischen Struktur des Flugzeugsitzes, so dass sehr leichte Strukturen mit hoher Festigkeit und Steifigkeit und/oder mit geringen Abmaßen hergestellt werden können. Insgesamt kann sich hieraus neben einem leichteren Flugzeugsitz eine hohe Designvariabilität ergeben.

Ferner ist zwischen der Sitzflächenbaugruppe 4 und der Sitzbasis 5 eine zweite Baugruppe aus einer zweiten Sicherungseinrichtung 19 und einer zweiten Kraftbegrenzungseinrichtung 17 vorgesehen. Die zweite Kraftbegrenzungseinrichtung 17 und die zweite Sicherungseinrichtung 19 können konstruktiv identisch zu der ersten Kraftbegrenzungseinrichtung 9 und der ersten Sicherungseinrichtung 18 ausgebildet sein. Die zweite Kraftbegrenzungseinrichtung 17 ist so angeordnet, dass sie nach einer Verformung oder Zerstörung der zweiten Sicherungseinrichtung 19 eine kraftbegrenzte zweite Relativbewegung zwischen der Sitzflächenbaugruppe 4 und der Sitzbasis 5 in Pfeilrichtung B ermöglicht.

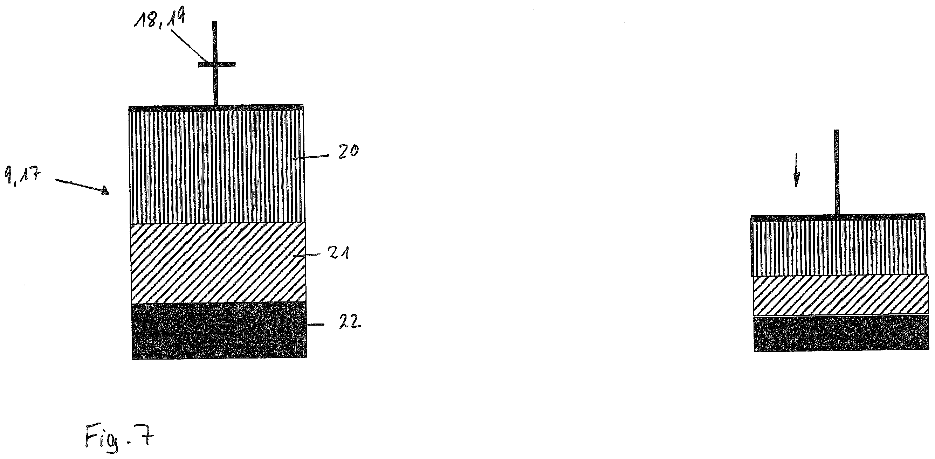

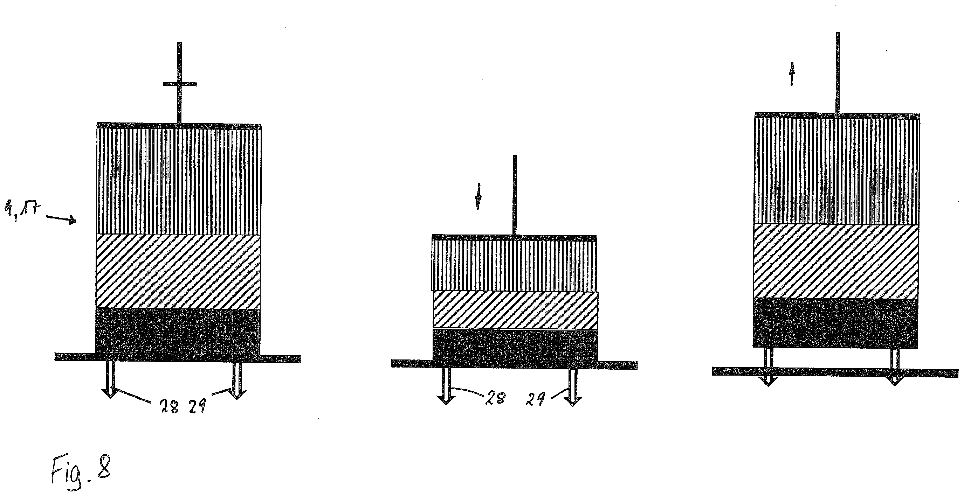

Die zweite Kraftbegrenzungseinrichtung 17 sowie die erste Kraftbegrenzungseinrichtung 9 können gemäß einem bevorzugten möglichen in den Figuren 7 und 8 gezeigten Ausführungsbeispiel einen Topf mit einer Füllung aus einem Metallschaum aufweisen, wobei ein Stempel vorgesehen ist, welcher bei einer kraftbegrenzten Bewegung in einem Crashfall in den Topf gedrückt wird und den Metallschaum komprimiert. Die Materialfüllung wird hierbei über einen Deformationsweg unter Energieaufnahme komprimiert. Der metallische Schaum kann dabei zusätzlich eine metallische Wabenstruktur umfassen. Vorzugsweise ist die Dichte der Materialfüllung zum Topfboden hin in drei verschiedenen Abschnitten unterschiedlich dicht und wird zum Topfboden hin dichter, so dass drei verschiedene Kraftbegrenzungsabschnitte 20, 21 und 22 mit einer zunehmenden Dichte und einem zunehmenden Kraftbegrenzungsniveau gebildet sind.

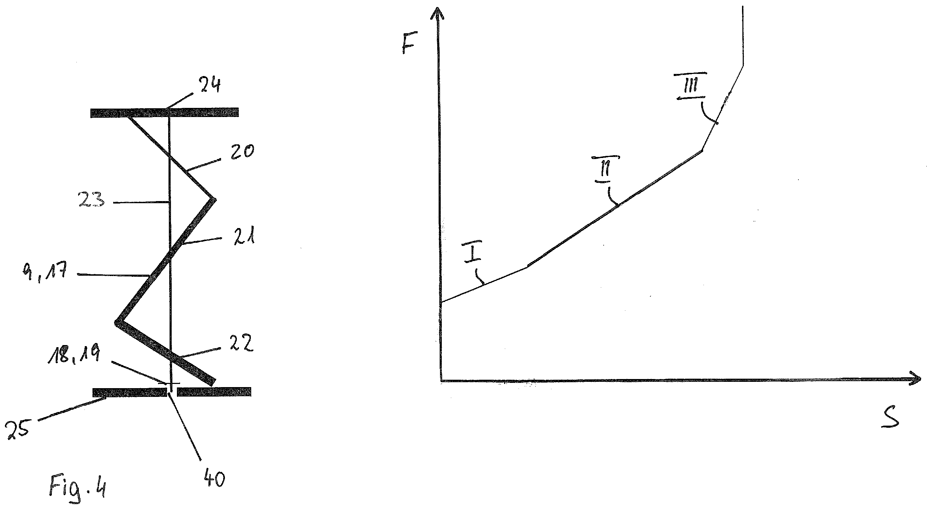

Gemäß einer weiteren bevorzugten Ausführungsform der Erfindung können die erste und/oder die zweite Kraftbegrenzungseinrichtung 9 und 17, wie in den Figuren 4 bis 6 zu erkennen ist, ein zwischen zwei Widerlagern 24 und 25 angeordnetes wellenförmiges Verformungsteil umfassen. Ferner ist eine Führungsstange 23 vorgesehen, welche mit einem Ende fest an dem in der Darstellung oberen Widerlager 24 gehalten ist und sich mit ihrem anderen Ende durch eine Öffnung 40 durch das untere, gegenüberliegende Widerlager 25 erstreckt.

An der Führungsstange 23 ist jeweils eine Sicherungseinrichtung 18, 19 in Form eines Scherbolzens vorgesehen, welcher an einem unmittelbar an den Rand der Öffnung des unteren Widerlagers 25 angrenzenden Abschnitt der Führungsstange 23 angeordnet ist bzw. an dem Rand der Öffnung des unteren Widerlagers 25 anliegt. Das wellenförmige Verformungsteil kann Abschnitte mit unterschiedlichen Dicken aufweisen, wie in der Figur 4 zu erkennen ist, welche verschiedene Kraftbegrenzungsabschnitte 20, 21 und 22 mit unter schiedlichen Kraftbegrenzungsverläufen ausbilden.

Zur Aktivierung der Kraftbegrenzungseinrichtungen 9, 17 muss zunächst die Verbindung der Sitzflächenbaugruppe 4 und der Sitzbasis 5 über die Sicherungseinrichtungen 18, 19 aufgehoben werden, indem der Scherbolzen abgeschert oder zumindest soweit verformt wird, dass die Führungsstange 23 frei gegenüber dem unteren Widerlager 25 verschoben werden kann. Solange die Sitzflächenbaugruppe 4 und die Sitzbasis 5 sich über die Sicherungseinrichtungen 18, 19 abstützen, wird das Verformungsteil der Kraftbegrenzungseinrichtungen 9 und 17 nicht belastet, es wird praktisch überbrückt. Erst durch das Aufheben der über die Sicherungseinrichtungen 18 und 19 geschaffenen Verbindungen wird das Verformungsteil belastet und die jeweilige Kraftbegrenzungseinrichtung 9 oder 17 beim Überschreiten der Verformungsgrenze des Verformungsteils aktiviert. Da die Kraftbegrenzungsabschnitte 20, 21 und 22 jeweils unterschiedliche Dicken und damit unterschiedliche Verformungsgrenzen aufweisen, wird zuerst der obere Kraftbegrenzungsabschnitt 20 mit der kleinsten Dicke und der kleinsten Verformungsgrenze verformt. Die durch die jeweilige Kraftbegrenzungseinrichtung 9 oder 17 ermöglichte Relativbewegung in dieser Phase entspricht der Geraden I in dem rechten Diagramm der Figur 4. Nachfolgend werden die Kraftbegrenzungsabschnitte 21 und 22 nacheinander verformt, wodurch das Kraftbegrenzungsniveau der Relativbewegung zwischen der Sitzflächenbaugruppe 4 und der Sitzbasis 5 zu den Geraden II und III ansteigt. Eine identische Verformungscharakteristik kann durch eine Kraftbegrenzungseinrichtung 9, 17 nach Figur 7 erzielt werden.

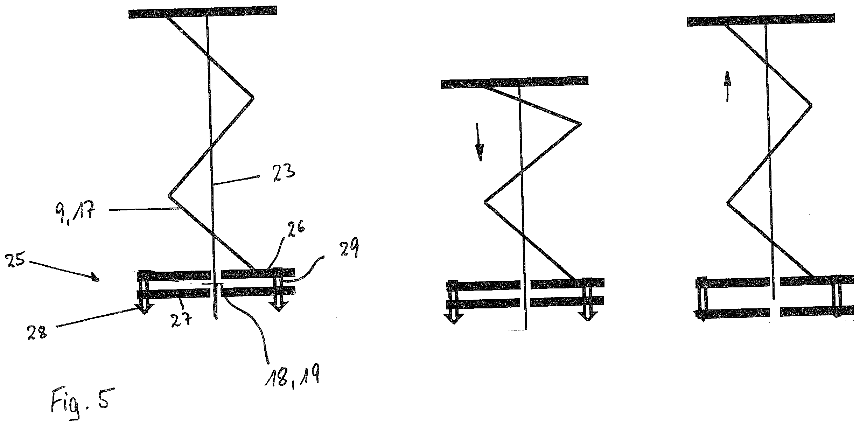

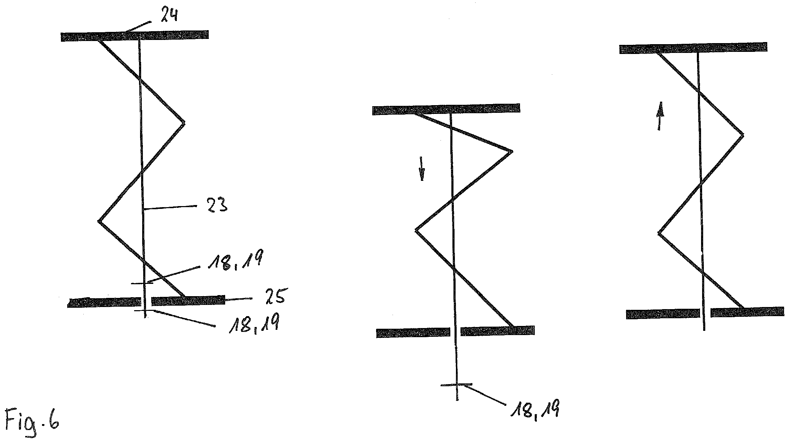

Wie in den Figuren 5 und 6 zu erkennen ist, kann das in der Darstellung untere Widerlager 25 auch durch zwei beabstandete Platten 26 und 27 gebildet sein, zwischen denen der Scherbolzen der Führungsstange 23 angeordnet ist. Alternativ kann das untere Widerlager 25 auch durch eine Platte gebildet und an der Führungsstange 23 zwei Scherbolzen vorgesehen sein, welche derart angeordnet sind, dass die Platte zwischen den Scherbolzen angeordnet ist. Durch beide Lösungen ist die Führungsstange 23 und damit das mit ihr verbundene, obere Widerlager 24 in beide Richtungen also sowohl in Richtung auf das andere Widerlager 25 als auch entgegen der Richtung des anderen Widerlagers 25 gegenüber dem anderen Widerlager 25 festgelegt. Damit wird die Kraftbegrenzungseinrichtung 9, 17 erst dann aktiviert, wenn entweder die auf das obere Widerlager 24 ausgeübte Druckkraft oder die darauf ausgeübte Zugkraft einen durch die Verformungsgrenze der Sicherungseinrichtung 18, 19 bzw. der Scherbolzen definierten Schwellwert übersteigt, wodurch die Sicherungseinrichtung 18, 19 gelöst wird.

Wie in den Figuren 5 und 8 zu erkennen ist, können die Kraftbegrenzungseinrichtungen 9 und 17 zusätzlich mit einem oder mehreren Widerhaken 28, 29 versehen sein, welche die Bewegung der Widerlager 24 und 25 zueinander zumindest in eine Richtung begrenzen. Dadurch können sowohl die erste als auch die zweite Relativbewegung in Pfeilrichtung A und B als auch die dazu jeweils rückwärts gerichtete Bewegung zwischen der Sitzflächenbaugruppe 4 und der Sitzbasis 5 begrenzt werden.

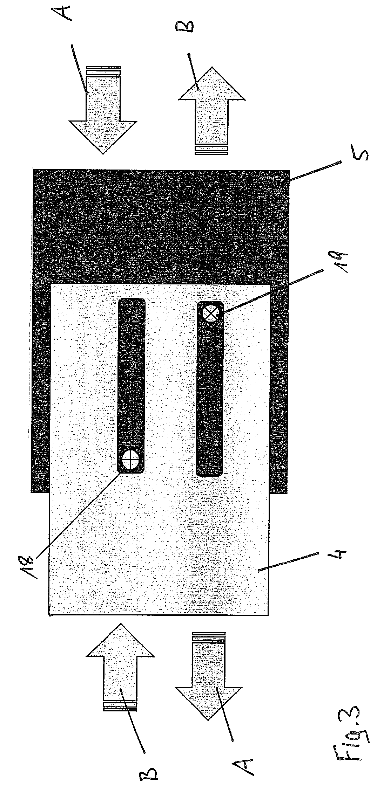

In der Figur 3 ist ein Teil der Sitzflächenbaugruppe 4 und der Sitzbasis 5 schematisch zu erkennen. In dem Teil 4 der Sitzflächenbaugruppe 4 sind zwei parallele Nuten vorgesehen, in die jeweils eine Sicherungseinrichtung 18, 19 in Form eines an der Sitzbasis 5 angeordneten hochstehenden Scherbolzens eingreift. Die Scherbolzen sind jeweils so angeordnet, dass sie in gegenüberliegende Randabschnitte der Nuten eingreifen und dadurch sowohl eine Relativbewegung in Pfeilrichtung A als auch in Pfeilrichtung B blockieren. Die Relativbewegungen in die Pfeilrichtungen A und B werden erst dann ermöglicht, wenn die Scherbolzen abgeschert werden und die kraftbegrenzte Relativbewegung dadurch freigegeben wird.

Sofern eine Verstelleinrichtung zwischen der Sitzflächenbaugruppe 4 und der Sitzbasis 5 mit einer dazugehörigen Blockiereinrichtung mit einem entsprechenden Blockierteil 12 zur Festlegung der beiden Teile zueinander vorgesehen ist, kann die Sicherungseinrichtung 18, 19 bevorzugt durch das in diesem Fall verwendete Blockierteil 12 gebildet sein. Dazu muss das Blockierteil 12 nur so ausgelegt werden, dass es eine vorbestimmte Verformungsgrenze aufweist, so dass es beim Überschreiten einer vorbestimmten Kraft zerstört wird und die Relativbewegung zwischen den beiden Teilen freigibt.

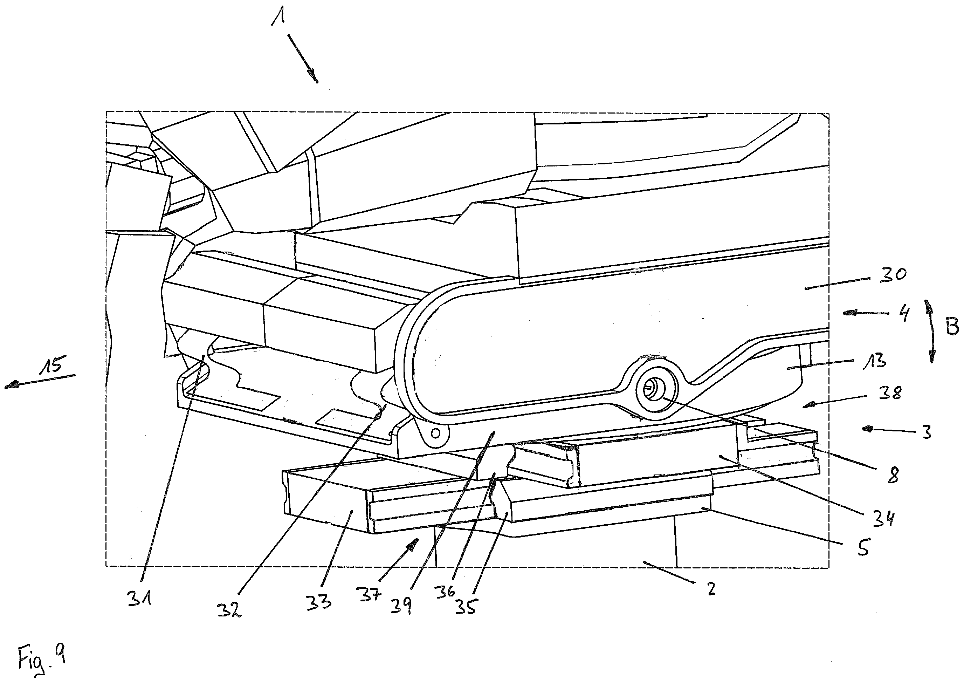

In der Figur 9 ist eine alternative Ausführungsform eines Flugzeugsitzes 1 in einem Ausschnitt zu erkennen, welcher einen Sitzunterbau 2 und eine Sitzbaugruppe 3 mit einer Sitzbasis 5 und einer Sitzflächenbaugruppe 4 aufweist. In der Sitzbaugruppe 3 sind zwischen der Sitzflächenbaugruppe 4 und der Sitzbasis 5 zusätzlich zwei Verstelleinrichtungen 37 und 38 vorgesehen, welche alternativ auch zwischen die Sitzbaugruppe 3 bzw. die Sitzbasis 5 und den Sitzunterbau 2 integriert sein können.

Die Verstelleinrichtungen 37 und 38 umfassen jeweils eine Führung 35 und 36 und jeweils eine in der jeweiligen Führung 35 und 36 linear verschiebbare Schiene 33 und 34. Die Führungen 35 und 36 sowie die Schienen 33 und 34 sind jeweils orthogonal zueinander ausgerichtet und ermöglichen dadurch zwei orthogonal zueinander ausgerichtete Verstellbewegungen der Sitzflächenbaugruppe 4 zu der Sitzbasis 5 und dem Sitzunterbau 2. Dabei ist eine Führung 35 an der Sitzbasis 5 angeordnet und dient zur verschieblichen Führung der Schiene 33, während die andere Führung 36 an der Schiene 33 angeordnet ist und der Führung der anderen orthogonal zu der ersten Schiene 33 ausgerichteten Schiene 34 dient. Aufgrund der orthogonal zu einander ausgerichteten Verstelleinrichtungen 37 und 38 kann die Sitzflächenbaugruppe 4 innerhalb einer rechteckigen oder quadratischen Verstellebene verstellt werden. Auf der in der Darstellung oberen Schiene 34 ist ferner ein Drehteller 13 vorgesehen, gegenüber dem die Sitzflächenbaugruppe 4 mit einer Grundplatte 39 verdrehbar gehalten ist. Die Sitzflächenbaugruppe 4 umfasst ferner einen Halterahmen 30, der über ein Wippengelenk 8 mit der Grundplatte 39 verbunden ist, so dass der Halterahmen 30 mit der Sitzfläche gegenüber der Grundplatte 39 in Verstellrichtung B verschwenkt werden kann.

Zwischen den in Blickrichtung 15 vorderen Randseiten der Grundplatte 39 und des Halterahmens 30 sind zwei Verformungsteile 31 und 32 in Form von im Querschnitt S-förmigen Biegestreifen vorgesehen, welche hier die zweite Kraftbegrenzungseinrichtung 17 bilden. Die Verformungsteile 31 und 32 ermöglichen durch das Lösen der nicht dargestellten zweiten Sicherungseinrichtung 19 eine kraftbegrenzte Schwenkbewegung des Halterahmens 30 zu der Grundplatte 39 entweder im Uhrzeigersinn oder gegen den Uhrzeigersinn um die Schwenkachse des Wippengelenkes 8 in die Pfeilrichtungen B. Dabei werden die Verformungsteile 31 und 32 unter Ausnutzung ihrer S-Form entweder gedehnt oder gestaucht. Die Dehnung oder Stauchung wird dabei durch eine plastische Verformung der Verformungsteile 31 und 32 ermöglicht, wobei die plastische Verformung der Verformungsteile 31 und 32 dann die der Kraftbegrenzung zugrunde liegende Energieabsorption bewirkt.

Die Verformungsteile 31 und 32 sind identisch ausgebildet und in einem identischen Abstand zu der Schwenkachse des Wippengelenkes 8 und zu der Mitten-Längsachse des Flugzeugsitzes 1 angeordnet, so dass die absorbierte Energie in den Verformungsteilen 31 und 32 während der kraftbegrenzten Relativbewegung möglichst identisch ist. Dadurch kann verhindert werden, dass der Halterahmen 30 und die Sitzfläche aufgrund einer unterschiedlichen Energieabsorption während der kraftbegrenzten Relativbewegung verkippt. Die Verformungsteile 31 und 32 sind als flächige bzw. streifenförmige Elemente z.B. aus Metallstreifen gebildet, welche durch Verbiegen um senkrecht zu den Längserstreckungen und parallel zu den Flächen der streifenförmigen Elemente ausgerichtete Biegeachsen zu einer S-Form plastisch verformt sind. Die Verformungsteile 31 und 32 sind dann so montiert, dass die hinzugedachten Biegeachsen der vorangegangenen plastischen Verformung parallel zu der Schwenkachse des Wippengelenkes 8 ausgerichtet sind. Sofern die Verformungsteile 31 und 32 nicht durch einen plastischen Verformungsprozess hergestellt sind, entspricht die gedachte Biegeachse der senkrecht zu der Längserstreckung des Verformungsteils 31 oder 32 durch den jeweiligen Krümmungsmittelpunkt verlaufenden Achse. Die Verformungsteile 31 und 32 sind in ihren Endabschnitten jeweils zu flächigen ebenen Befestigungsabschnitten geformt, mit denen sie an dem Grundbauteil 39 und dem Halterahmen 30 z.B. durch Schrauben befestigt sind. Damit sind die Verformungsabschnitte der Verformungsteile 31 und 32 im Kraftfluss und geometrisch zwischen dem Grundbauteil 39 und dem Halterahmen 30 angeordnet.

Das kraftbegrenzte Bewegungsverhalten zwischen dem Halterahmen 30 und dem Grundbauteil 39 kann je nach der Wahl des Werkstoffs der Verformungsteile 31 und 32, der Bemessung der Verformungsteile 31 und 32 sowie durch die Positionierung und die Wahl der Anzahl der Verformungsteile 31 und 32 individuell eingestellt werden. Dabei werden die Verformungsteile 31 und 32 aufgrund der vorgesehenen nicht dargestellten Sicherungseinrichtung im Normalgebrauch des Flugzeugsitzes 1 nicht belastet. Die Verformungsteile 31 und 32 sind hier zur Kraftbegrenzung der Relativbewegung des Halterahmens 30 zu dem Grundbauteil 39 während der Schwenkbewegung um die Schwenkachse des Wippengelenkes 8 vorgesehen. Die Verformungsteile 31 und 32 können aber durch eine entsprechende Anordnung auch zur Kraftbegrenzung einer anderen Relativbewegung verwendet werden.

Die Verformungsteile 31 und 32 weisen eine S-Form auf und sind bewusst zu einer Überlänge gewellt, welche dann beim Ausüben einer Zugkraft durch die plastische Verformung herausgezogen wird. Wenn die S-Form vollständig herausgezogen ist und das jeweilige Verformungsteil 31, 32 dann zu einem flächigen, ebenen Teil gezogen wurde, bildet das Verformungsteil 31 oder 32 dann gleichzeitig eine Begrenzung der Relativbewegung, da die Relativbewegung ab dieser Stellung nur noch durch Ausübung einer erheblich größeren Zugkraft durch eine plastische Dehnung des Verformungsteils 31 oder 32 möglich ist. Die Kraftbegrenzungskurve weist an dieser Stelle einen Sprung auf ein erheblich höheres Niveau auf. In dem vorliegenden Ausführungsbeispiel sind die Verformungsteile 31 und 32 durch zu einer S-Form verformte Stahlbleche gebildet, welche im nicht verformten Zustand eine Länge von 70 mm und eine Breite von 45-80 mm aufweisen.

Ferner ist die Sitzflächenbaugruppe 4 mit dem Grundbauteil 39 über einen nicht zu erkennenden Drehtisch um eine zu einer Sitzfläche der Sitzflächenbaugruppe 4 senkrechte Drehachse verdrehbar. Die Drehbewegung zwischen dem Grundbauteil 39 und dem Drehtisch ist jedoch über eine nicht zu erkennende Sicherungseinrichtung wie z.B. einen Scherbolzen blockiert. Die Drehbewegung des Grundbauteils zu der Sitzbasis 5 wird dann erst durch ein Abscheren des Scherbolzens also durch ein Lösen der Sicherungseinrichtung ermöglicht, so dass sich die Sitzflächenbaugruppe 4 im Unfall entsprechend ausrichten kann. Ferner kann die Ausrichtung auch durch eine geeignete Verstelleinrichtung verstellbar und durch eine Blockiereinrichtung blockierbar sein. In diesem Fall bildet die Blockiereinrichtung geleichzeitig die zu lösende Sicherungseinrichtung.

Der Drehtisch ist so ausgerichtet, dass die Sitzflächenbaugruppe 4 um eine senkrecht zu der Sitzfläche ausgerichtete Drehachse verdreht werden kann, also um die Hochachse des aufrecht in dem Flugzeugsitz 1 sitzenden Passagiers. Der Drehtisch kann sowohl zwischen der Sitzbasis 5 und den Verstelleinrichtungen 37, 38 als auch zwischen den Verstelleinrichtungen 37 und 38 selbst als auch zwischen den Verstelleinrichtungen 37, 38 und dem Grundbauteil 39 der Sitzflächenbaugruppe 4 angeordnet sein.

## Patentansprüche

1. Flugzeugsitz (1) mit einer Sitzbaugruppe (3), wobei
- die Sitzbaugruppe (3) eine Sitzbasis (5) und eine Sitzflächenbaugruppe (4) umfasst, wobei
- zwischen der Sitzbasis (5) und der Sitzflächenbaugruppe (4) eine erste Kraftbegrenzungseinrichtung (9) vorgesehen ist, welche bei einer Aktivierung eine erste Relativbewegung zwischen der Sitzbasis (5) und der Sitzflächenbaugruppe (4) ermöglicht und kraftbegrenzt, wobei die erste Kraftbegrenzungseinrichtung (9) den Abbau kinetischer Energie in einem Crashfall ermöglicht und der Energieabbau in der ersten Kraftbegrenzungseinrichtung (9) erfolgt, wobei
- sich die Sitzflächenbaugruppe (4) gegenüber der Sitzbasis (5) in Richtung der ersten Relativbewegung über eine erste Sicherungseinrichtung (18) abstützt, wobei
- die erste Sicherungseinrichtung (18) bei einer Bewegung der Sitzflächenbaugruppe (4) gegenüber der Sitzbasis (5) oder umgekehrt in Richtung der ersten Relativbewegung eine höhere Verformungsgrenze als das zur Aktivierung der ersten Kraftbegrenzungseinrichtung (9) erforderliche Kraftbegrenzungsniveau aufweist, wobei wirkende Kräfte im Normalgebrauch bis zu der höheren Verformungsgrenze von der ersten Sicherungseinrichtung (18) abgefangen werden und die erste Kraftbegrenzungseinrichtung (9) erst dann belastet wird, wenn die erste Sicherungseinrichtung (18) durch das Überschreiten der Verformungsgrenze ihre Sicherungsfunktion nicht mehr wahrnimmt,
**dadurch gekennzeichnet, dass**
- die erste Sicherungseinrichtung (18) durch einen Scherbolzen gebildet ist.

2. Flugzeugsitz (1) nach Anspruch 1, **dadurch gekennzeichnet, dass**
- die erste Kraftbegrenzungseinrichtung (9) eine nichtlineare Kraftbegrenzungscharakteristik aufweist.

3. Flugzeugsitz (1) nach Anspruch 2, **dadurch gekennzeichnet, dass**
- die erste Kraftbegrenzungseinrichtung (9) mehrere Kraftbegrenzungsabschnitte (20, 21, 22) aufweist, welche während der Aktivierung der ersten Kraftbegrenzungseinrichtung (9) in zeitlicher Abfolge nacheinander aktivierbar sind und ein unterschiedliches Kraftbegrenzungsniveau aufweisen.

4. Flugzeugsitz (1) nach einem der vorangegangenen Ansprüche, **dadurch gekennzeichnet, dass**
- wenigstens eine zweite Sicherungseinrichtung (19) vorgesehen ist, über welche sich die Sitzflächenbaugruppe (4) in Richtung einer zweiten Relativbewegung gegenüber der Sitzbasis (5) abstützt.

5. Flugzeugsitz (1) nach einem der vorangegangenen Ansprüche, **dadurch gekennzeichnet, dass**
- wenigstens eine zweite Kraftbegrenzungseinrichtung (17) vorgesehen ist, welche bei einer Aktivierung eine zweite, sich von der ersten Relativbewegung unterscheidende Relativbewegung zwischen der Sitzflächenbaugruppe (4) und der Sitzbasis (5) ermöglicht.

6. Flugzeugsitz (1) nach Anspruch 4 und 5, **dadurch gekennzeichnet, dass**
- die zweite Sicherungseinrichtung (19) bei einer Bewegung der Sitzflächenbaugruppe (4) gegenüber der Sitzbasis (5) in Richtung der zweiten Relativbewegung eine höhere plastische Verformungsgrenze als das zur Aktivierung der zweiten Kraftbegrenzungseinrichtung (9) erforderliche Kraftbegrenzungsniveau aufweist.

7. Flugzeugsitz (1) nach einem der Ansprüche 5 oder 6, **dadurch gekennzeichnet, dass**
- die erste Kraftbegrenzungseinrichtung (9) in Richtung der zweiten Relativbewegung und/oder die zweite Kraftbegrenzungseinrichtung (17) in Richtung der ersten Relativbewegung an der Sitzflächenbaugruppe (4) und/oder an der Sitzbasis (5) verschieblich geführt ist.

8. Flugzeugsitz (1) nach einem der Ansprüche 4 bis 7, **dadurch gekennzeichnet, dass**
- die zweite Sicherungseinrichtung (19) durch einen Scherbolzen gebildet ist.

9. Flugzeugsitz (1) nach einem der vorangegangenen Ansprüche, **dadurch gekennzeichnet, dass**
- die erste und/oder zweite Kraftbegrenzungseinrichtung (9, 17) jeweils ein gewelltes, plastisch verformbares Verformungsteil (31, 32) umfasst.

10. Flugzeugsitz (1) nach einem der vorangegangenen Ansprüche, **dadurch gekennzeichnet, dass**
- die erste und/oder zweite Kraftbegrenzungseinrichtung (9, 17) jeweils einen komprimierbaren Metallschaum umfasst.

11. Flugzeugsitz (1) nach einem der vorangegangenen Ansprüche, **dadurch gekennzeichnet, dass**
- die Sitzflächenbaugruppe (4) gegenüber der Sitzbasis (5) mittels einer ersten und/oder zweiten Verstelleinrichtung (37, 38) in eine erste und/oder eine zweite Verstellrichtung verstellbar ist, und
- die durch die erste und/oder zweite Kraftbegrenzungseinrichtung (9, 17) ermöglichte erste und/oder zweite Relativbewegung gleichgerichtet zu der ersten und/oder zweiten Verstellrichtung sind.

12. Flugzeugsitz (1) nach Anspruch 11, **dadurch gekennzeichnet, dass**
- die durch die erste und/oder die zweite Verstelleinrichtung (37, 38) ermöglichte Verstellbewegung durch eine erste und/oder zweite Blockiereinrichtung blockierbar ist, und
- die erste und/oder zweite Sicherungseinrichtung durch jeweils ein Blockierteil (12) der ersten und/oder zweiten Blockiereinrichtung gebildet sind oder durch ein Blockierteil (12) der ersten und/oder zweiten Blockiereinrichtung festlegbar sind.

13. Flugzeugsitz (1) nach einem der vorangegangenen Ansprüche, **dadurch gekennzeichnet, dass**
- zwischen der Sitzbasis (5) und der Sitzflächenbaugruppe (4) ein Drehtisch vorgesehen ist, und die erste oder die zweite Relativbewegung durch eine Drehbewegung der Sitzflächenbaugruppe (4) gegenüber der Sitzbasis (5) um eine senkrecht zu einer Sitzfläche der Sitzflächenbaugruppe (4) ausgerichtete Drehachse gebildet ist.

## Claims

1. Aircraft seat (1) comprising a seat assembly (3), wherein
- the seat assembly (3) comprises a seat base (5) and a seat surface assembly (4), wherein
- a first force limiting device (9) is provided between the seat base (5) and the seat surface assembly (4) which, when activated, enables and force-limits a first relative movement between the seat base (5) and the seat surface assembly (4), wherein the first force limiting device (9) enables the dissipation of kinetic energy in a crash case and the energy dissipation takes place in the first force limiting device, wherein
- the seat surface assembly (4) is supported relative to the seat base (5) in the direction of the first relative movement via a first securing device (18), wherein
- the first securing device (18) comprises a higher deformation limit than the force limiting level required to activate the first force limiting device (9) when the seat surface assembly (4) moves relative to the seat base (5) or vice versa in the direction of the first relative movement, wherein acting forces in normal use are absorbed by the first securing device (18) up to the higher deformation limit and the first force limiting device (9) is only loaded when the first securing device (18) no longer performs its securing function due to the deformation limit being exceeded,
**characterized in that**
- the first securing device (18) is formed by a shear bolt.

2. Aircraft seat (1) according to claim 1, **characterized in that**
- the first force limiting device (9) comprises a nonlinear force limiting characteristic.

3. Aircraft seat (1) according to claim 2, **characterized in that**
- the first force limiting device (9) comprises a plurality of force limiting sections (20, 21, 22) which can be activated successively in time sequence during activation of the first force limiting device (9) and comprise a different force limiting level.

4. Aircraft seat (1) according to any one of the preceding claims, **characterized in that**
- at least one second securing device (19) is provided, via which the seat surface assembly (4) is supported in the direction of a second relative movement with respect to the seat base (5).

5. Aircraft seat (1) according to any one of the preceding claims, **characterized in that**
- at least one second force limiting device (17) is provided which, when activated, enables a second relative movement, different from the first relative movement, between the seat surface assembly (4) and the seat base (5).

6. Aircraft seat (1) according to claims 4 and 5, **characterized in that**
- the second securing device (19) comprises a higher plastic deformation limit than the force limiting level required to activate the second force limiting device (9) when the seat surface assembly (4) moves relative to the seat base (5) in the direction of the second relative movement.

7. Aircraft seat (1) according to any one of the claims 5 or 6, **characterized in that**
- the first force limiting device (9) is displaceably guided in the direction of the second relative movement and/or the second force limiting device (17) is displaceably guided in the direction of the first relative movement on the seat surface assembly (4) and/or on the seat base (5).

8. Aircraft seat (1) according to any one of claims 4 to 7, **characterized in that**
- the second securing device (19) is formed by a shear bolt.

9. Aircraft seat (1) according to any one of the preceding claims, **characterized in that**
- the first and/or second force limiting device (9, 17) each comprises a corrugated, plastically deformable deformation part (31, 32).

10. Aircraft seat (1) according to any one of the preceding claims, **characterized in that**
- the first and/or second force limiting device (9, 17) each comprises a compressible metal foam.

11. Aircraft seat (1) according to any one of the preceding claims, **characterized in that**
- the seat surface assembly (4) is adjustable relative to the seat base (5) by means of a first and/or second adjustment device (37, 38) in a first and/or a second adjustment direction, and
- the first and/or second relative movement enabled by the first and/or second force limiting device (9, 17) are in the same direction as the first and/or second adjustment direction.

12. Aircraft seat (1) according to claim 11, **characterized in that**
- the adjustment movement enabled by the first and/or the second adjustment device (37, 38) can be blocked by a first and/or second blocking device, and
- the first and/or second securing device are each formed by a blocking part (12) of the first and/or second blocking device or can be fixed by a blocking part (12) of the first and/or second blocking device.

13. Aircraft seat (1) according to any one of the preceding claims, **characterized in that**
- a turntable is provided between the seat base (5) and the seat surface assembly (4), and the first or the second relative movement is formed by a rotational movement of the seat surface assembly (4) relative to the seat base (5) about a rotational axis aligned perpendicular to a seat surface of the seat surface assembly (4).

## Revendications

1. Siège d'avion (1) équipé d'un ensemble siège (3), dans lequel
- l'ensemble siège (3) comprend une base de siège (5) et un ensemble assise (4), dans lequel
- un premier dispositif de limitation de force (9) est prévu entre la base de siège (5) et l'ensemble assise (4), permettant et limitant en force, lors d'une activation, un premier mouvement relatif entre la base de siège (5) et l'ensemble assise (4), le premier dispositif de limitation de force (9) permettant la réduction de l'énergie cinétique en cas de crash et la réduction de l'énergie s'effectuant dans le premier dispositif de limitation de force (9), dans lequel
- l'ensemble assise (4) s'appuie, par le biais d'un premier dispositif d'arrêt (18), par rapport à la base de siège (5) en direction du premier mouvement relatif, dans lequel
- le premier dispositif d'arrêt (18) présente, lors d'un mouvement de l'ensemble assise (4) par rapport à la base de siège (5) ou inversement dans la direction du premier mouvement relatif, une limite de déformation supérieure au niveau de limitation de force nécessaire à l'activation du premier dispositif de limitation de force (9), des forces exercées en utilisation normale jusqu'à la limite de déformation supérieure étant absorbées par le premier dispositif d'arrêt (18) et le premier dispositif de limitation de force (9) étant uniquement sollicité quand le premier dispositif d'arrêt (18) n'assure plus sa fonction d'arrêt en raison du dépassement de la limite de déformation,
**caractérisé en ce que**
- le premier dispositif d'arrêt (18) est formé par un boulon de cisaillement.

2. Siège d'avion (1) selon la revendication 1, **caractérisé en ce que**
- le premier dispositif de limitation de force (9) présente une caractéristique de limitation de force non linéaire.

3. Siège d'avion (1) selon la revendication 2, **caractérisé en ce que**
- le premier dispositif de limitation de force (9) présente plusieurs sections de limitation de force (20, 21, 22), qui peuvent être activées successivement dans le temps pendant l'activation du premier dispositif de limitation de force (9) et qui présentent un niveau de limitation de force différent.

4. Siège d'avion (1) selon l'une des revendications précédentes, **caractérisé en ce que**
- au moins un second dispositif d'arrêt (19) est prévu, par le biais duquel l'ensemble assise (4) s'appuie en direction d'un second mouvement relatif par rapport à la base de siège (5).

5. Siège d'avion (1) selon l'une des revendications précédentes, **caractérisé en ce que**
- au moins un second dispositif de limitation de force (17) est prévu, qui, lors de son activation, permet un second mouvement relatif, différent du premier mouvement relatif, entre l'ensemble assise (4) et la base de siège (5).

6. Siège d'avion (1) selon les revendications 4 et 5, **caractérisé en ce que**
- le second dispositif d'arrêt (19) présente, lors d'un mouvement de l'ensemble assise (4) par rapport à la base de siège (5) en direction du second mouvement relatif, une limite de déformation plastique supérieure au niveau de limitation de force nécessaire à l'activation du second dispositif de limitation de force (9).

7. Siège d'avion (1) selon l'une des revendications 5 ou 6, **caractérisé en ce que**
- le premier dispositif de limitation de force (9) est guidé en direction du second mouvement relatif et/ou le second dispositif de limitation de force (17) en direction du premier mouvement relatif de manière déplaçable sur l'ensemble assise (4) et/ou sur la base de siège (5).

8. Siège d'avion (1) selon l'une des revendications 4 à 7, **caractérisé en ce que**
- le second dispositif d'arrêt (19) est formé par un boulon de cisaillement.

9. Siège d'avion (1) selon l'une des revendications précédentes, **caractérisé en ce que**
- le premier et/ou second dispositif de limitation de force (9, 17) comprennent respectivement une partie de déformation (31, 32) ondulée, déformable plastiquement.

10. Siège d'avion (1) selon l'une des revendications précédentes, **caractérisé en ce que**
- le premier et/ou second dispositif de limitation de force (9, 17) comprennent respectivement une mousse métallique compressible.

11. Siège d'avion (1) selon l'une des revendications précédentes, **caractérisé en ce que**
- l'ensemble assise (4) peut être réglé par rapport à la base de siège (5) au moyen d'un premier et/ou second dispositif de réglage (37, 38) dans une première et/ou une seconde direction de réglage, et
- le premier et/ou second mouvement relatif permis par le premier et/ou second dispositif de limitation de force (9, 17) sont dirigés dans la même direction que la première et/ou seconde direction de réglage.

12. Siège d'avion (1) selon la revendication 11, **caractérisé en ce que**
- le mouvement de réglage permis par le premier et/ou le second dispositif de réglage (37, 38) peut être bloqué par un premier et/ou second dispositif de blocage, et
- le premier et/ou second dispositif d'arrêt sont formés par respectivement une partie de blocage (12) du premier et/ou second dispositif de blocage ou peuvent être fixés par une partie de blocage (12) du premier et/ou second dispositif de blocage.

13. Siège d'avion (1) selon l'une des revendications précédentes, **caractérisé en ce que**
- une table tournante est prévue entre la base de siège (5) et l'ensemble assise (4), et le premier ou le second mouvement relatif est formé par un mouvement rotatif de l'ensemble assise (4) par rapport à la base de siège (5) sur un axe de rotation orienté perpendiculairement à une assise de l'ensemble assise (4).
